# EUROPEAN PATENT SPECIFICATION

(11) **EP 2 115 330 B1**
(45) Date of publication and mention of the grant of the patent: **02.03.2011**
(21) Application number: 06849533.2
(22) Date of filing: 29.12.2006
(51) Int. Cl.: F16H 63/42, B60K 35/00

(54) **TACHOMETER AND GEAR INDICATING APPARATUS**
DREHZAHLMESSER UND GANGANZEIGEVORRICHTUNG
TACHYMÈTRE ET APPAREIL D'INDICATION DE RAPPORT

(43) Date of publication of application: 11.11.2009
(73) Proprietor: Renault Trucks, 69800 Saint Priest (FR)
(72) Inventor: CRAVE, Philippe, F-69003 Lyon (FR); LONGUEVILLE, François, F-69230 Saint Genis Laval (FR)
(74) Representative: Putet, Gilles
(86) International application number: PCT/IB2006/004198
(87) International publication number: WO 2008/081220

(56) References cited:
- WO-A-03/074327
- US-A- 5 017 916
- US-A1- 2003 074 158

## Description

### Field of the invention

The invention regards a tachometer and gear indicating apparatus for a vehicle having a multi-gear transmission of the manual or semi automatic type.

### Technological background

A motorized vehicle is commonly equipped with a series of instruments that can give information about a number of parameters of the vehicle such as the vehicle speed, the engine speed i.e. the engine crankshaft rotational speed that is measured in revolution per minutes (rpm), the engine lubricant temperature etc. The instruments such a speedometer, a tachometer, a temperature gauge etc. are generally positioned on a vehicle dashboard and display the instantaneous state of the parameters to the driver usually in a visual mode. Such an instrument is disclosed in US 2003074158 which reflects the preamble of claim 1.

Based on the information displayed on the vehicle instrument and on other information such as the state of the traffic, the sound of the engine etc. the vehicle driver makes continuous decisions on what input to transmitted on vehicle control devices that generally are a steering wheel, a brake pedal, a clutch pedal, an accelerator pedal, a vehicle gearshift etc.

By acting on the gearshift and thereby by selecting an appropriate gear ratio between the engine crankshaft and a vehicle powered wheel, the vehicle driver adjusts the engine speed to the vehicle speed. By upshifting that is to say shifting to a higher transmission gear or by downshifting that is to say shifting to a lower transmission gear, the driver ensures that the vehicle engine operates within its optimum power and torque ranges, the vehicle driver ensures that the engine operates under an appropriate engine speed given a vehicle speed and load. Failing to maintain the engine in its optimum power and torque ranges may result in premature engine wear, excessive fuel consumption and therefore unnecessary emission of pollutants.

Optimum power and torque ranges can be experimentally measured and curves showing the optimum power and torque ranges are available to the vehicle driver in order to help the vehicle driver to choose the optimum gear shift. The gear selection therefore relies heavily on the driver's experience and to the driver's ability to sense the appropriate gear and the appropriate timing to engage the said gear.

Another point that has to be mentioned is that heavy vehicles are usually equipped with manual transmissions that can have a large number of gears; this makes the gear selection process difficult for inexperienced driver as well as for experienced drivers, should they have to face emergency conditions.

It therefore appears that there is room for improvement in the gear selection process.

### Summary of the invention

An object of the invention is to propose a method and a display apparatus that facilitates optimum gear determination by a vehicle driver and that incites a vehicle driver to select the optimum gear.

This object is achieved by the special features of apparatus claim 1 and method claim 10.

In an enhanced embodiment, said CPU determines at least two forecast engine speeds corresponding to two speculated transmission gear ratios corresponding respectively to a downshift and to an upshift.

In a further enhanced embodiment, said CPU determines an optimum transmission gear ratio, and a figure (16) corresponding to said optimum gear ratio is digitally displayed next to the corresponding forecast engine speed on the graduated scale. In such an embodiment, the present invention makes provision for the determination of an optimum gear for a given engine speed and vehicle speed and the corresponding optimum engine speed should the optimum gear be engaged and for informing the vehicle driver of the said optimum gear and what effect it will have on the speed engine if the driver decide to engage the said optimum gear. An effect of the invention is the incitation to engage the optimum gear which is achieved by displaying not only the optimum gear but also the consequence on engine speed of engaging the optimum gear.

To further facilitate the vehicle driver's decision, even in stressful conditions such as an emergency brake or a collision avoidance, the gear display may show an arrow oriented from the figure representing the currently engaged gear to the figure representing the optimum gear.

A digit indicating the number of gear changes that is required to reach the optimum gear from the currently engaged gear can be associated with the arrow.

It can also be envisaged to include in the gear display a plus + or a minus - sign that can be juxtaposed to the said digit to indicate whether to shift to a higher transmission gear or to shift to a lower transmission gear.

In practical terms, the apparatus includes an engine speed sensor and to a vehicle speed sensor that are connected to the CPU where the optimum gear and corresponding optimum engine speed are calculated.

The CPU can include a microprocessor, a data memory such as a RAM memory, a program memory such as a ROM memory and an input/output interface.

The apparatus may be constructed such that the tachometer and the gear display are implemented on a matrix display device.

The invention also includes a method for indicating gear information on a tachometer and gear indicating apparatus for a vehicle having a multi-gear transmission, said apparatus comprising the features of claim 1.

### Brief description of the drawings

The invention will be subsequently described in greater detail with reference to the attached drawings in which:
Fig. 1 shows schematically a vehicle fitted with an embodiment of an apparatus according to the invention,
Fig. 2 shows an optimum gear display which is part of the apparatus according to the invention.

### Description of the invention

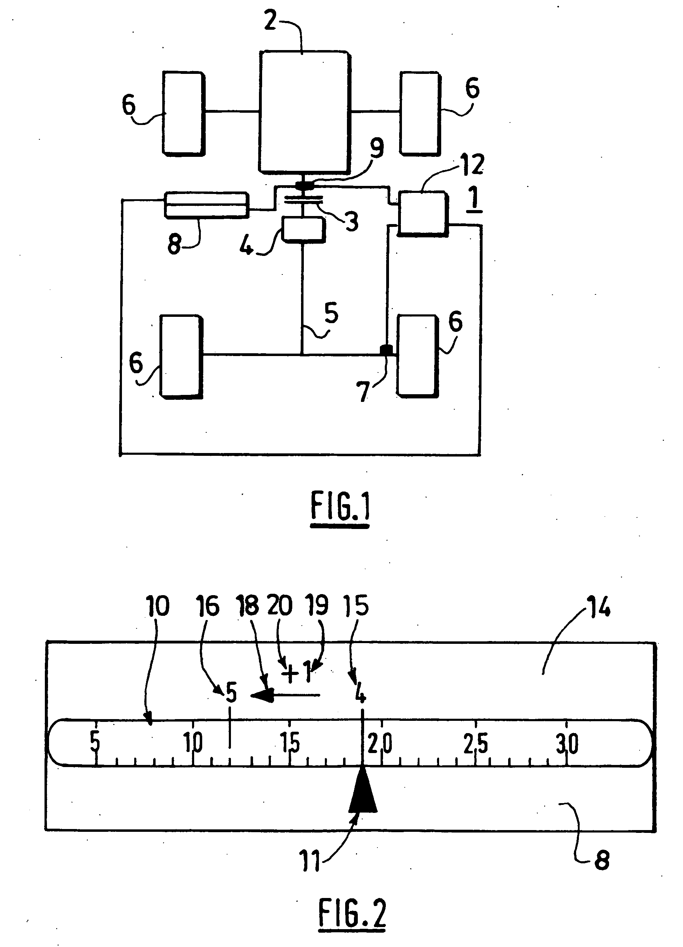

Figure 1 shows schematically a vehicle in its essential parts i.e. an engine 2, a clutch 3, a gear box 4, a transmission 5 and at least four wheels 6.

The vehicle is equipped with a tachometer 8 that is connected via a cable to an engine speed sensor 9 that detects, directly or indirectly, the speed of the engine crankshaft. The engine speed sensor 9 can suitably be a commonly available Hall-effect sensor.

As illustrated in Figure 2, the tachometer 8 has a graduated scale 10 (in rpm) that corresponds to the engine operative range; in the illustrated example, the scale 10 covers a range from 0 to 3000 rpm. A pointer 11 moves along the graduated scale 10. In the illustrated example, the pointer is mechanically/electrically driven according to the signal that is sent by the speed engine sensor. Instead of a mechanical/electrical pointer 11, a series of LED or an LCD pointer can be envisaged. Other display systems could be used, for example using a multi-purpose matrix display device, such as a LCD or plasma display as used in computer display technology, where all the information can be displayed through the selective activation of a series of pixels within a matrix. In such a case, the pointer can be the end of a luminescent bar, the length of which is proportional to the engine speed.

The vehicle is also equipped according to the invention with an optimum gear indicating apparatus 1. The apparatus includes a CPU 12 that can suitably include a microprocessor, a data memory such as a RAM memory, a program memory such as a ROM memory and an input/output interface.

The CPU 12 is suitably connected to a sensor that detects the engine speed. This sensor can be the already existing speed sensor that is connected to a vehicle tachometer 8.

The CPU 12 is also connected to a vehicle speed sensor 7 which can for example be fitted on a wheel axle. The vehicle speed sensor 7 can be, for example, a commonly available Hall-effect sensor. The vehicle speed sensor 7 can be the already existing speed sensor that is found in a vehicle and that is connected mechanically or electronically to a speedometer.

The optimum gear ratio and thereby the optimum gear, is calculated by the CPU 12 as a function of a number of parameters, including for example the engine speed and the vehicle speed. Examples of algorithms to determine such optimum speed can be found in documents EP 0 007 881 or WO2005/056343. The optimum speed determination can benefit from the use of a so-called "electronic horizon" system, where thanks to a vehicle position device, such as a GPS, and a digital map, the system can forecast a number of parameters of the travel route ahead of the vehicle such as road curvature, slope, intersections, speed limits, etc. These parameters can be fed to the CPU to be used in an optimum speed determination algorithm. Knowing the optimum gear ratio and the vehicle speed, the CPU 12 also calculates the optimum engine speed that is to say the engine speed when the optimum gear is engaged.

The CPU 12 is connected to a gear display 14 that can be for example a LCD or LED display and which is an important feature of the apparatus 1 according to the invention. The gear display can have its own CPU or be controlled by the CPU 12. In fact, the gear display will be advantageously implemented within a multi-purpose matrix display device together with the tachometer.

One important feature of the gear display 14 is that the said gear display 14 is adjacent to the tachometer 8; more precisely, the gear display is adjacent to the graduated scale 10 of the tachometer 8. In the illustrated example the tachometer 8 is linear and therefore the gear display is also linear and is parallel to the graduated scale 10 of the tachometer 8. However in the probably more common case of a circular tachometer, the display is concentrically arranged around the tachometer.

According to another aspect of the invention, the gear display can display at least two gear figures at different locations, the location of each figure being itself variable. The location of each said gear figure will be dependent on the corresponding engine speed.

The gear indicator could comprise several separate display elements, each of them movable independently, for example mechanically/electrically as a traditional speedometer indicator. The locations of each display element would for example then be implemented as a function of a location coordinate for each display implement. Said location coordinate being itself a function of the corresponding engine speed.

According to the data sent by the CPU 12, the gear display 14 indicates two types of information in relation to the graduated scale 10 of the tachometer 8.

Firstly the gear display 14 shows the currently engaged gear next to the current engine speed by digitally displaying, next to the pointer 11, a figure 15 (usually composed of one or two digits in the case of a 12 speed gearbox for example) corresponding to the actual gear.

Secondly, the gear display 14 shows the optimum gear by digitally displaying a figure 16 corresponding to the said optimum gear next to the graduation of the scale 10 that in turn corresponds to the optimum engine speed calculated by the CPU 12. A major effect of the invention is that it shows the vehicle driver not only what the optimum gear is but also the benefit of engaging the said optimum gear in term of engine speed.

Basically, the apparatus according to the invention can be considered as using the figures 15 and 16, corresponding to the actual gear and the optimum gear, as pointers indicating the corresponding engine speed. In sort, the pointer and the corresponding gear figure are united, or at least very closely associated, so as to form a single piece of visual information containing in fact two pieces of logical information. Thanks to this aspect of the invention, the driver needs to locate only one piece of visual information, which is of course quicker and safer than having to locate two pieces of visual information and having to connect them mentally.

The optimum gear indicating apparatus 1 according to the invention is a strong incentive to engage the optimum gear insofar as the driver can see the effect on the engine speed, and that he can anticipate the potential benefits. On the other hand, the driver can, to the contrary, come to a conclusion different from that determined by the CPU, based on his appraisal of the real-life events.

When the optimum speed is engaged the gear display 14 shows a single figure that is displayed next to the pointer 11; the driver is therefore not distracted by any unnecessary piece of information.

In a variant of the invention, the gear display 14 shows an arrow 18 oriented from the figure 15 representing the currently engaged gear to the figure 16 representing the optimum gear. A digit 19 indicating the number of gear changes that is required to reach the optimum gear from the currently engaged gear can be associated with the arrow 18. A plus + or a minus - sign 20 can be juxtaposed to the digit 19 to indicate whether to shift to a higher transmission gear or to shift to a lower transmission gear.

In a less sophisticated embodiment, the invention can be implement without an optimum gear calculation unit, or at least without displaying that optimum gear through the discussed apparatus.

In this less sophisticated embodiment, the apparatus can display at least one other gear figure corresponding to a speculated gear, for example the closest gear ratio (either up or down, but preferably both) to the current ratio, this speculated gear figure being digitally displayed next to the corresponding forecast engine speed on the graduated scale. For example, when the vehicle is driving in fifth gear at 1800 rpm, the CPU would calculate that, at the same vehicle speed, the engine speed would be for example1950 rpm in fourth gear and 1650 rpm in fifth gear. In such a case, an apparatus according to the invention could indicate a digit "5" next to the 1800 mark on the scale, a digit "4" next to the 1950 rpm mark and the digit "6" next to the 1650 mark. The driver would be then left with the task of analysing and determining which gear would be optimum in his situation, and what shifting he need to perform to gear-in the optimum gear ratio. Of course, More than two speculated gears could be displayed simultaneously. In any case, the number of displayed gear ratios would be at least limited to those for which the corresponding forecast speed is within a predetermined range corresponding to a plausible working condition of the engine.

This above embodiment could be combined with an optimum gear calculation algorithm, where the optimum gear would then be highlighted amongst the other gear figures, for example by being displayed in a different size or in a different color.

An enhanced optimum gear algorithm could also be used where several optimum gears would be calculated, for example one with respect to fuel economy (which could be highlighted in green for example) and one with respect to power availability (which could be highlighted in red for example).

The invention also relates to a method for indicating gear information on an apparatus of the type described above. Such a method comprises the step of assigning respectively to said current gear figure and to said speculated gear figure at least one display location coordinate which is a function of respectively the actual engine speed and the forecast speed. The assigned coordinate for each gear figure is then implemented by the apparatus so as to display corresponding figure at a specific location with respect to the scale.

The invention is not limited to the illustrative embodiments described above and shown in the drawings, but can be varied within the scope of the following patent claims. The invention can, for example, be implemented in vehicles having a multi-gear manual transmission or a so called semi automatic transmission wherein a driver has to manually operate a gearshift or wheel mounted gear change controls but does not have to press a clutch pedal.

## Claims

1. A tachometer and gear indicating apparatus for a vehicle having a multi-gear transmission comprising:
an analogue tachometer display device (8) indicating by continuously displacing a pointer (11) against a graduated scale (10) the number of revolutions per unit of time of a vehicle engine,
a computer processing unit CPU (12) receiving input signals representative of the actual engine speed and of the actual vehicle speed and determining at least one forecast engine speed corresponding to said actual vehicle speed, based on at least one speculated transmission gear ratio,
a gear indicator display (14) adjacent to the graduated scale (10)
**characterized in that**
a current gear figure (15) corresponding to the currently engaged gear is digitally displayed next to the current position of the pointer (11),
and a speculated gear figure (16) corresponding to the at least one speculated gear is digitally displayed next to the corresponding forecast engine speed on the graduated scale,
and wherein said gear indicator display is capable of displaying at least said current and speculated gear figures (15, 16) at various locations, said locations of the current gear and speculated gear figures (15, 16) are determined according to said actual engine speed and said forecast engine speed.

2. An apparatus according to claim 1, **characterized in that** said CPU (12) determines at least two forecast engine speeds corresponding to two speculated transmission gear ratios corresponding respectively to a downshift and to an upshift.

3. An apparatus according to any of claims 1 to 2, **characterized in that** said CPU (12) determines an optimum transmission gear ratio, and **in that** a figure (16) corresponding to said optimum gear ratio is digitally displayed next to the corresponding forecast engine speed on the graduated scale.

4. The apparatus according to claim 3, **characterized in that** the gear display (14) includes an arrow (18) oriented from the figure representing the currently engaged gear to the figure representing the optimum gear.

5. The apparatus according to claims 3 or 4, **characterized in that** the gear display (14) displays a plus + or a minus - sign (20) to indicate whether to shift to a higher transmission gear or to shift to a lower transmission gear.

6. The apparatus according to claims 4 or 5, **characterized in that** the gear display (14) includes a digit (19) indicating the number of gear changes that is required to reach the optimum gear from the currently engaged gear (18).

7. The apparatus according to any of claims 1 to 6, **charaterized in that** the tachometer and the gear display are implemented on a matrix display device.

8. The apparatus according to one of the claims 1 to 7, **characterized in that** the CPU (12) is connected to an engine speed sensor (9) and to a vehicle speed sensor (7).

9. The apparatus according to one of the claims 1 to 8, **characterized in that** the CPU (12) includes a microprocessor, a data memory such as a RAM memory, a program memory such as a ROM memory and an input/output interface.

10. A method for indicating gear information on a tachometer and gear indicating apparatus for a vehicle having a multi-gear transmission, said apparatus comprising:
an analogue tachometer display device (8) indicating by continuously displacing a pointer (11 ) against a graduated scale (10) the number of revolutions per unit of time of a vehicle engine,
a computer processing unit CPU (12) receiving input signals representative of the actual engine speed and of the actual vehicle speed and determining at least one forecast engine speed corresponding to said actual vehicle speed, based on at least one speculated transmission gear ratio,
a gear indicator display (14) on which a current gear figure (15) corresponding to the currently engaged gear and a speculated gear figure (16) corresponding to the at least one speculated gear are digitally displayed,
wherein the method is **characterized in that** it comprises the step of assigning respectively to said current gear figure and to said speculated gear figure at least one display location coordinate which is a function of respectively the actual engine speed and the forecast speed.

11. A method according to claim 10, **characterized in that** the assigned coordinate for each gear figure is then implemented by the apparatus so as to display corresponding figure at a specific location with respect to the scale.

## Patentansprüche

1. Tachometer- und Ganganzeigevorrichtung für ein Fahrzeug mit einem mehrgängigen Getriebe, umfassend
- eine analoge Tachometeranzeigevorrichtung (8), die durch fortlaufende Verschiebung eines Zeigers (11) gegen eine abgestufte Skala (10) die Anzahl von Umdrehungen per Zeiteinheit eines Fahrzeugmotors anzeigt,
- eine Rechnerprozessoreinheit CPU (12), die Eingangssignale empfängt, die für die momentane Motordrehzahl und die momentane Fahrzeuggeschwindigkeit repräsentativ sind, und auf der Basis wenigstens eines vermuteten Getriebeübersetzungsverhältnisses entsprechend der momentanen Fahrzeuggeschwindigkeit wenigstens eine zu erwartende Motordrehzahl bestimmt,
- ein Ganganzeigedisplay (14), das an die abgestufte Skala (10) angrenzt, **dadurch gekennzeichnet, dass**
- eine Momentangangziffer (15), die dem momentan eingerückten Gang entspricht, digital neben der momentanen Position des Zeigers (11) angezeigt wird, und
- eine Vermutungsgangziffer (16), die dem wenigstens einen vermuteten Gang entspricht, digital neben der entsprechenden, zu erwartenden Motordrehzahl auf der abgestuften Skala angezeigt wird,
- und wobei das Ganganzeigedisplay wenigstens die Momentan- und Vermutungsgangziffern (15, 16) an verschiedenen Stellen anzeigen kann, wobei die Stellen der Momentangang- und Vermutungsgangziffern (15, 16) der momentanen Motordrehzahl und der zu erwartenden Motordrehzahl entsprechend bestimmt werden.

2. Vorrichtung nach Anspruch 1, **dadurch gekennzeichnet, dass** die CPU (12) wenigstens zwei zu erwartende Motordrehzahlen zwei vermuteten Getriebeübersetzungsverhältnissen entsprechend bestimmt, die einem Nach-unten-Schalten bzw. einem Nach-oben-Schalten entsprechen.

3. Vorrichtung nach einem der Ansprüche 1 bis 2, **dadurch gekennzeichnet, dass** die CPU (12) ein optimales Getriebeübersetzungsverhältnis bestimmt und dass eine dem optimalen Übersetzungsverhältnis entsprechende Ziffer (16) digital neben der entsprechenden, zu erwartenden Motordrehzahl auf der abgestuften Skala angezeigt wird.

4. Vorrichtung nach Anspruch 3, **dadurch gekennzeichnet, dass** die Ganganzeige (14) einen Pfeil (18) aufweist, der von der Ziffer, die den momentan eingerückten Gang repräsentiert, zu der Ziffer gerichtet ist, die den optimalen Gang repräsentiert.

5. Vorrichtung nach Anspruch 3 oder 4, **dadurch gekennzeichnet, dass** die Ganganzeige (14) ein Plus + oder ein Minus - Zeichen (20) anzeigt, um anzugeben, ob in einen höheren Getriebegang oder in einen niedrigeren Getriebegang zu schalten ist.

6. Vorrichtung nach Anspruch 4 oder 5, **dadurch gekennzeichnet, dass** die Ganganzeige (14) eine Ziffer (19) aufweist, die die Anzahl der Gangwechsel angibt, die zur Erreichung des optimalen Gangs von dem momentan eingerückten Gang (18) aus erforderlich ist.

7. Vorrichtung nach einem der Ansprüche 1 bis 6, **dadurch gekennzeichnet, dass** der Tachometer und die Ganganzeige auf einer Matrixanzeigevorrichtung implementiert sind.

8. Vorrichtung nach einem der Ansprüche 1 bis 7, **dadurch gekennzeichnet, dass** die CPU (12) mit einem Motordrehzahlsensor (9) und einem Fahrzeuggeschwindigkeitssensor (7) verbunden ist.

9. Vorrichtung nach einem der Ansprüche 1 bis 8, **dadurch gekennzeichnet, dass** die CPU (12) einen Mikroprozessor, einen Datenspeicher, wie z. B. einen RAM-Speicher, einen Programmspeicher, wie z.B. einen ROM-Speicher, und ein Eingangs-/Ausgangs-Interface aufweist.

10. Verfahren zur Anzeige einer Ganginformation auf einer Tachometer- und Ganganzeigevorrichtung für ein Fahrzeug mit einem Mehrganggetriebe, wobei die Vorrichtung umfasst:
- eine analoge Tachometeranzeigevorrichtung (8), die durch fortlaufende Verschiebung eines Zeigers (11) gegen eine abgestufte Skala (10) die Anzahl von Umdrehungen per Zeiteinheit eines Fahrzeugmotors anzeigt,
- eine Rechnerprozessoreinheit CPU (12), die Eingangssignale empfängt, die für die momentane Motordrehzahl und die momentane Fahrzeuggeschwindigkeit repräsentativ sind, und auf der Basis wenigstens eines vermuteten Getriebeübersetzungsverhältnisses entsprechend der momentanen Fahrzeuggeschwindigkeit wenigstens eine zu erwartende Motordrehzahl bestimmt,
- ein Ganganzeigedisplay (14), auf dem eine Momentangangziffer (15), die dem momentan eingerückten Gang entspricht, und eine Vermutungsgangziffer (16), die dem wenigstens einen Vermutungsgang entspricht, digital angezeigt werden,
- wobei das Verfahren **dadurch gekennzeichnet ist, dass** es den Schritt umfasst, dass der Momentangangziffer und der Vermutungsgangziffer wenigstens eine Anzeigestellenkoordinate zugeordnet wird, die eine Funktion der momentanen Motordrehzahl bzw. der zu erwartenden Drehzahl ist.

11. Verfahren nach Anspruch 10, **dadurch gekennzeichnet, dass** die zugeordnete Koordinate für jede Gangziffer dann durch die Vorrichtung so implementiert wird, dass die entsprechende Ziffer an einer bestimmten Stelle bezüglich der Skala angezeigt wird.

## Revendications

1. Tachymètre et appareil d'indication de rapport pour un véhicule équipé d'une transmission à rapports multiples, comprenant:
un dispositif d'affichage tachymétrique analogique (8) qui indique en déplaçant un pointeur (11) de façon continue sur une échelle graduée (10) le nombre de révolutions par unité de temps d'un moteur de véhicule,
une unité centrale de traitement UCT (12) qui reçoit des signaux d'entrée qui représentent le régime réel du moteur et la vitesse réelle du véhicule et qui détermine au moins un régime de moteur prédit qui correspond à ladite vitesse réelle du véhicule, sur la base d'au moins un rapport de démultiplication de la boîte de vitesses spéculé, et
un écran d'affichage d'indicateur de rapport (14) qui est situé à proximité de l'échelle graduée (10),
**caractérisé en ce que**:
un chiffre de rapport actuel (15) qui correspond au rapport actuellement engagé est affiché de façon numérique à côté de la position actuelle du pointeur (11), et
un chiffre de rapport spéculé (16) qui correspond audit au moins un rapport spéculé est affiché de façon numérique à côté du régime de moteur prédit correspondant sur l'échelle graduée, et
ledit écran d'affichage d'indicateur de rapport étant capable d'afficher au moins lesdits chiffres de rapport actuel et spéculé (15, 16) à des endroits différents, lesdits endroits d'affichage des chiffres de rapport actuel et spéculé (15, 16) étant déterminés sur la base dudit régime réel du moteur et dudit régime prédit du moteur.

2. Appareil selon la revendication 1, **caractérisé en ce que** ladite UCT (12) détermine au moins deux régimes de moteur prédits qui correspondent à deux rapports de démultiplication de la boîte de vitesse spéculés qui correspondent respectivement à une rétrogradation de vitesse et un passage à une vitesse supérieure.

3. Appareil selon l'une quelconque des revendications 1 à 2, **caractérisé en ce que** ladite UCT (12) détermine un rapport de démultiplication de la boîte de vitesse optimum, et **en ce qu'**un chiffre (16) qui correspond audit rapport de démultiplication optimum est affiché de façon numérique à côté du régime de moteur prédit correspondant sur l'échelle graduée.

4. Appareil selon la revendication 3, **caractérisé en ce que** l'affichage du rapport (14) comporte une flèche (18) qui part du chiffre qui représente le rapport actuellement engagé en direction du chiffre qui représente le rapport optimum.

5. Appareil selon la revendication 3 ou 4, **caractérisé en ce que** l'affichage du rapport (14) affiche un signe plus (+) ou un moins (-) (20) pour indiquer s'il faut passer à un rapport de transmission supérieur ou rétrograder vers un rapport de transmission inférieur.

6. Appareil selon la revendication 4 ou 5, **caractérisé en ce que** l'affichage du rapport (14) comprend un caractère numérique (19) qui indique le nombre de changements de rapport qu'il est nécessaire d'exécuter pour atteindre le rapport optimum à partir du rapport actuellement engagé (18).

7. Appareil selon l'une quelconque des revendications 1 à 6, **caractérisé en ce que** le tachymètre et l'affichage du rapport sont mis en oeuvre sur un dispositif d'affichage matriciel.

8. Appareil selon l'une quelconque des revendications 1 à 7, **caractérisé en ce que** l'UCT (12) est connectée à un capteur de régime de moteur (9) et à un capteur de vitesse de véhicule (7).

9. Appareil selon l'une quelconque des revendications 1 à 8, **caractérisé en ce que** l'UCT (12) comprend un microprocesseur, une mémoire de données telle qu'une mémoire vive (RAM), une mémoire de programmes telle qu'une mémoire morte (ROM), et une interface d'entrée/sortie.

10. Procédé pour indiquer des informations de rapport sur un tachymètre et un appareil d'indication de rapport pour un véhicule équipé d'une transmission à rapports multiples, ledit appareil comprenant:
un dispositif d'affichage tachymétrique analogique (8) qui indique en déplaçant un pointeur (11) de façon continue sur une échelle graduée (10) le nombre de révolutions par unité de temps d'un moteur de véhicule,
une unité centrale de traitement (12) qui reçoit des signaux d'entrée qui représentent le régime réel du moteur et la vitesse réelle du véhicule et qui détermine au moins un régime de moteur prédit qui correspond à ladite vitesse réelle du véhicule, sur la base d'au moins un rapport de démultiplication de la boîte de vitesses spéculé, et
un écran d'affichage d'indicateur de rapport (14) sur lequel un chiffre de rapport actuel (15) qui correspond au rapport actuellement engagé, et un chiffre de rapport spéculé (16) qui correspond audit au moins un rapport spéculé sont affichés de façon numérique,
dans lequel le procédé est **caractérisé en ce qu'**il comprend l'étape qui consiste à attribuer respectivement audit chiffre de rapport actuel et audit chiffre de rapport spéculé au moins une coordonnée de position d'affichage qui dépend respectivement du régime réel du moteur et du régime prédit du moteur.

11. Procédé selon la revendication 10, **caractérisé en ce que** la coordonnée attribuée à chaque chiffre de rapport est ensuite mise en oeuvre par l'appareil de manière à afficher un chiffre correspondant à un endroit spécifique par rapport à l'échelle.
